# EUROPÄISCHE PATENTANMELDUNG

(11) **EP 1 126 188 A1**
(43) Veröffentlichungstag der Anmeldung: **22.08.2001**
(21) Anmeldenummer: 00890047.4
(22) Anmeldetag: 18.02.2000
(51) Int. Cl.: F16D 3/224, F16D 3/22

(54) **Gleichlaufkugelfestgelenk**

(71) Anmelder: Pankl R&D GmbH, 8600 Bruck an der Mur (AT)
(72) Erfinder: Pankl, Gerold, Ing., 8600 Bruck an der Mur (AT)
(74) Vertreter: Patentanwälte BARGER, PISO & PARTNER

(57) **Zusammenfassung**

Die Erfindung betrifft ein Gleichlaufkugelfestgelenk, das eine Welle (2), einen inneren Gelenkskörper (3), einen äußeren Gelenkskörper (4), zwischen dem inneren und dem äußeren Gelenkskörpern angeordnete, das Drehmoment übertragende Rollkörper, insbesondere Kugeln (5), und einen die Kugeln zumindest im wesentlichen in vorbestimmten Lagen haltenden Käfig (8) aufweist.

Die Erfindung ist dadurch gekennzeichnet, daß der Käfig (8) aus zumindest zwei Teilen (6, 7) besteht und daß der innere Gelenkskörper (3) mit der zugehörigen Welle (2) einstükkig ausgebildet ist.

Ausgestaltungen betreffen die Ausgestaltung des Käfigs (8) und ein Verfahren zur Montage des Gelenkes.

## Beschreibung

Die Erfindung betrifft ein Gleichlaufkugelfestgelenk aufweisend eine Welle, einen inneren Gelenkskörper, einen äußeren Gelenkskörper, zwischen dem inneren und dem äußeren Gelenkskörpern angeordneten, das Drehmoment übertragenden Rollkörpern, insbesondere Kugeln, und einen die Kugeln zumindest im wesentlichen in vorbestimmten Lagen haltenden Käfig. Die Erfindung betrifft auch ein Verfahren zur Montage des Gelenkes.

Derartige Gelenke werden beispielsweise verwendet, wenn bei Kraftfahrzeugen gelenkte Räder angetrieben werden, da solche Gelenke relativ große Schwenkwinkel, 40° und mehr, zulassen.

Der Aufbau solcher Gelenke ist im wesentlichen der folgende: Die Antriebswelle weist an ihrem dem Gelenk zugewandten Ende eine Zahnung auf, mit der sie in einer komplementären Zahnung des inneren Gelenkskörpers sitzt. Der innere Gelenkskörper selbst besitzt eine im wesentlichen kugelige Außenfläche, mit dem Kugelmittelpunkt im Gelenksmittelpunkt, in die, radial bezüglich der Wellenachse, Einschnitte angeordnet sind, deren Grund kreisförmig um den Gelenkmittelpunkt verlauft und deren Querschnitt ebenfalls kreisförmig ausgebildet ist. In diesen Einschnitten sind Kugeln angeordnet, die das Drehmoment übertragen, und zwar vom inneren Gelenkskörper auf einen äußeren Gelenkskörper, der ein im wesentlichen zylindrisches Äußeres aufweist und in seinem Inneren hohlkugelig ausgebildet ist, mit dem Kugelmittelpunkt im Gelenksmittelpunkt, wobei auch hier wieder radial verlaufende Ausnehmungen für die Kugeln und dazwischen liegende radial, somit nach innen ragende, Vorsprünge stehengelassen sind, an denen die Kugeln anliegen.

Es befinden sich somit die Kugeln, jede für sich, in einer Nut mit kreisförmiger Mittellinie angeordnet. Bei Schrägstellung der beiden Gelenksachsen machen die Kugeln diese Verschwenkung um den halben Winkel mit, wodurch sich die hohen erzielbaren Schwenkwinkel erklären lassen. Es ist aber die Lage der Kugeln innerhalb der Nuten nicht stabil, sodaß es notwendig ist, einen Käfig vorzusehen, der die richtige Lage der Kugeln innerhalb der einzelnen Nuten sicherstellt.

Es ist unmittelbar einsichtig, daß die Fertigung dieser Teile mit großteils sphärischen Oberflächen mit ausreichender Genauigkeit nicht trivial ist, doch besteht ein weiteres, nicht sofort erkennbares und relativ komplexes Problem darin, ein derartiges Gelenk zusammenzubauen bzw. zu demontieren, da durch die hohlkugelförmige Ausbildung des Inneren des äußeren Gelenkskörpers eine Montage in einer Richtung nicht möglich ist. Bei herkömmlichen Gelenken der eingangs genannten Art erfolgt die Montage so, daß der innere Gelenkskörper aus der Mittelebene des äußeren Gelenkskörpers um 90° verdreht wird, und daß sodann bei bereits aufgesetztem Käfig die Kugeln eingesetzt und gemeinsam mit dem inneren Gelenkskörper und dem Käfig wieder in die richtige Lage zurückgeschwenkt werden, worauf die Welle mit ihrem gezahnten Ende in den inneren Gelenkskörper eingeschoben und passend arretiert wird.

Es nun das Ziel der Erfindung, ein derartiges Gelenk kompakter und leichter auszubilden, insbesondere, aber nicht ausschließlich, für die Verwendung von Hochleistungskraftfahrzeugen, wie sie im Renn- und Rallye-Sport eingesetzt werden.

Erfindungsgemäß wird dieses Ziel dadurch erreicht, daß die Welle an ihrem gelenkseitigen Ende einstückig als innerer Gelenkskörper ausgebildet ist und daß der Käfig zumindest zweigeteilt ist.

Einer Kompaktierung derartiger Gelenke stand prinzipiell die mehrfache Drehmomentübertragung zwischen der Welle und dem äußeren Gelenkskörper bzw. dem Körper, in dem dieser äußere Gelenkskörper wieder eingesetzt ist, entgegen, da für jede derartige Übertragung im jeweiligen Bauteil eine genügende Materialanhäufung (Fleisch) zur Verfügung stehen muß. So naheliegend es auf den ersten Blick auch scheint, daher zumindest die Welle gleich mit dem inneren Gelenkskörper einstückig auszubilden, war gerade dieser Weg wegen der oben erwähnten Notwendigkeit der 90°-igen Verdrehung beim Montieren des Gelenkes nicht möglich, da die Welle eine solche Verdrehung nicht zuläßt, sondern an den äußeren Gelenkskörper nach Erreichen des maximal vorgesehenen Gelenkwinkels, zumeist in einer Größenordnung von 45° (oder knapp darüber) anschlägt, sodaß ein solches Gelenk nicht mehr montierbar wäre.

Durch die zumindest zweiteilige Ausführung des Käfigs ist es aber völlig überraschend möglich, auf eine derartige Verschwenkung beim Montieren des Gelenkes zu verzichten, da die Welle samt innerem Gelenkskörper im gestreckten Gelenkzustand in den äußeren Gelenkskörper eingeschoben werden kann und dann durch Verdrehen um die gestreckte Achse ihre eigentliche Montageposition erreicht.

Da somit beim Montieren keine Verschwenkung des Gelenkes mehr notwendig ist, ist es durch diese erfindungsgemäße Maßnahme möglich geworden, den inneren Gelenkskörper einstückig mit der Welle auszubilden und so eine deutliche Reduktion der Abmessungen, insbesondere des Durchmessers, des Gelenkes und damit eine merkliche Massenreduktion zu erreichen. Durch die einstückige Ausbildung entfällt auch die Verbindung zwischen Welle und innerem Gelenkskörper und die mit ihrer Herstellung verbundenen Kosten.

Bei der Montage werden sodann die Kugeln in die nunmehr ausgebildeten Nuten ebenfalls im wesentlichen in Richtung der gestreckten Gelenkachse eingesetzt, und es wird nach dem Einsetzen der Kugeln der Käfig bzw. zumindest der letzte der Käfigteile montiert und befestigt. Der erste oder mehrere erste Käfigteile können, je nach Unterteilung des Käfigs, schon vor dem Einbringen der Kugeln montiert werden.

Die Erfindung wird im folgenden an Hand der Zeichnung näher erläutert. Dabei zeigt
die Fig. 1 ein erfindungsgemäßes Gleichlaufkugelfestgelenk in einer einachsigen Explosionsdarstellung,
die Fig. 2 einen Axialschnitt durch ein erfindungsgemäßes Gelenk in gestreckter Lage und
die Fig. 3 einen Schnitt analog zur Fig. 2, allerdings in verschwenkter Lage.

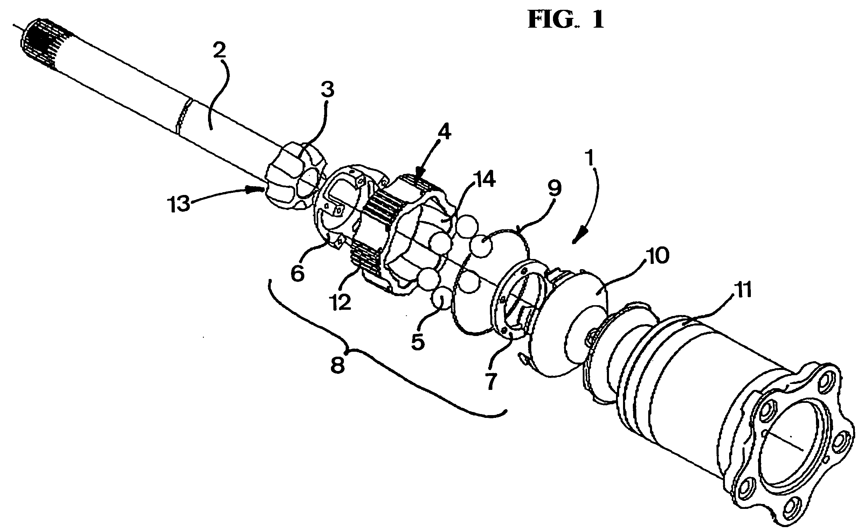

Wie aus Fig. 1 ersichtlich ist, besteht ein erfindungsgemäßes Gelenk 1 aus einer Welle 2 mit am gelenkseitigen Ende der Welle 2 einstückig ausgebildetem inneren Gelenkskörper 3 mit Nuten 13. Weiters umfaßt ein erfindungsgemäßes Gelenk einen äußeren Gelenkskörper 4 mit Nuten 14 und die das Drehmoment übertragenden und dem Gelenk seinen Namen gebenden Kugeln 5. Die Kugeln 5 werden in den Nuten 13, 14 durch einen im gezeigten Beispiel aus zwei Teilen 6, 7 bestehenden, in seiner Gesamtheit mit 8 bezeichneten Käfig fixiert.

Aus Fig. list auch beispielhaft eine Montage eines derartigen Gelenkes, beispielsweise in einer Radnabe, ersichtlich: Am äußeren Gelenkskörper 4 wird mittels eines Federringes 9 eine Glocke 10 befestigt, der äußere Gelenkskörper 4 ist mittels einer Außenverzahnung 12 drehfest mit einer Nabe 11 verbunden und darin passend axial fixiert bzw. gelagert.

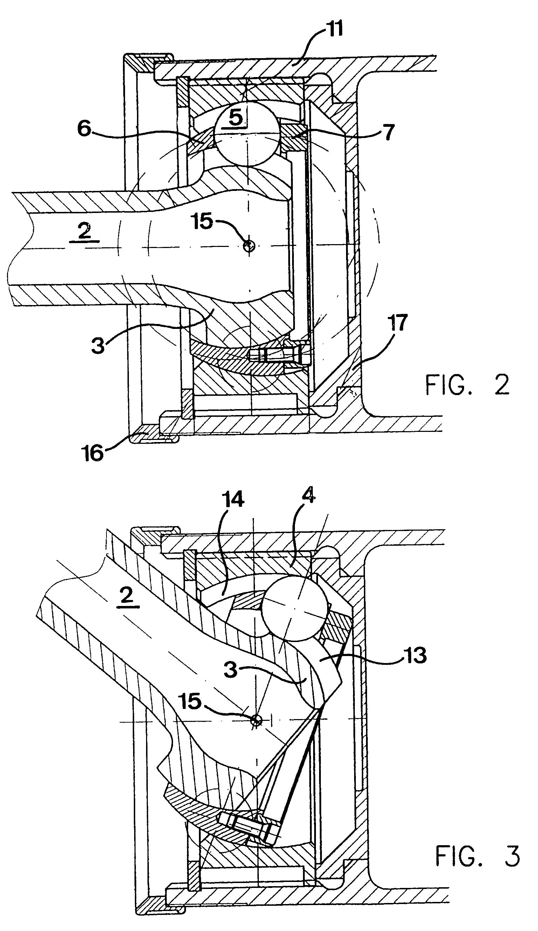

Der zusammengebaute Zustand eines derartigen Gelenkes geht aus den Fig. 2 und 3 hervor. Dabei ist auch die Befestigung des Käfigringes 7 am Käfigkörper 6 mittels Schrauben deutlich zu sehen. Da die durch die Schrauben zu übertragenden Kräfte gering sind, können diese auch im relativ filigranen Käfig vorgesehen werden. Es treten ja im wesentlichen nur Kräfte zufolge des zu übertragenden Drehmomentes auf, die Kräfte in anderer als in Umfangsrichtung sind ausschließlich Reibungs- und Massenkräfte, die bei nicht fluchtenden Achsen durch das Hin-Hergehen der Kugeln während einer Umdrehung bewirkt werden und fallen somit nicht wirklich ins Gewicht.

Zur Bewegung der Kugeln soll noch ausgeführt werden, daß diese eigentlich keine rollende Bewegung ausführen, sondern bei gestrecktem Gelenk die Drehbewegung mitmachen wie ein starrer Körper, bei ausgelenktem Gelenk, wie oben ausgeführt, im Zuge jeder Umdrehung des Gelenkes eine hin-herpendelnde Bewegung vollführen, wobei sie allerdings durch ihre Lagerung in der Nut nicht abrollen können, sondern teils rollen, teils geschoben werden, je nach der momentan vorherrschenden Dynamik.

Aus den Fig. 2 und 3 geht auch die asymmetrische Ausbildung des Gelenkes bezüglich der Normalachse auf die gestreckte Lage durch den Gelenksmittelpunkt 15 hervor: Der Mittelpunkt der spärischen Flächen des äußeren Gelenkskörpers 4 ist gegenüber dem Gelenksmittelpunkt 15 nach rechts, der Mittelpunkt der spärischen Flächen des inneren Gelenkskörpers 3 ist gegenüber dem Gelenksmittelpunkt 15 nach links versetzt, sodaß die freie Fläche des äußeren Gelenkskörpers 4 normal zur gestreckten Gelenksachse rechts vom Gelenksmittelpunkt 15 größer ist als links vom Gelenksmittelpunkt 15, was eine bevorzugte Montagerichtung ergibt.

Die Montage bzw. umgekehrt Demontage eines erfindungsgemäßen Gelenkes, wie in den Fig. 1 bis 3 dargestellt ist, geht folgendermaßen von sich: Es wird zuerst der Käfigkörper 6 in die Nuten des äußeren Gelenkkörpers 4 eingeschoben und sodann (bei den dargestellten sechs Kugeln) um 30° verdreht. Dabei erfolgt das Einschieben zufolge der asymmetrischen Ausbildung des Gelenkes von rechts nach links in Fig. 2.

Sodann wird die Welle 2 in gleiche Richtung mit ihrer gesamten Länge durch den äußeren Gelenkkörper 4 und den bereits eingesetzten Käfigkörper 6 geschoben, bis der einstückig ausgebildete innere Gelenkkörper 3 an seiner Endlage sitzt, wobei noch die Ausnehmungen des Käfigs über den Erhebungen des inneren Gelenkkörpers plaziert sind, wobei durch anschließendes Verdrehen um 30° die endgültige Lage erreicht wird. Sodann werden die Kugeln in ihre Nuten eingebracht, es wird der Käfigring 7 aufgesetzt und fixiert, wodurch das Gelenk an sich fertigt montiert ist. Das Einbringen von Fett, die weitere Montage in einer Nabe oder Radtrommel erfolgt wie bei herkömmlichen Gelenken und bedarf daher keiner weiteren Erläuterung.

## Patentansprüche

1. Gleichlaufkugelfestgelenk aufweisend eine Welle (2), einen inneren Gelenkskörper (3), einen äußeren Gelenkskörper (4), zwischen dem inneren und dem äußeren Gelenkskörpern angeordneten, das Drehmoment übertragenden Rollkörpem, insbesondere Kugeln (5), und einen die Kugeln zumindest im wesentlichen in vorbestimmten Lagen haltenden Käfig (8), dadurch gekennzeichnet, daß der Käfig (8) aus zumindest zwei Teilen (6, 7) besteht und daß der innere Gelenkskörper (3) mit der zugehörigen Welle (2) einstückig ausgebildet ist.

2. Gleichlaufkugelfestgelenk nach Anspruch 1, dadurch gekennzeichnet, daß der Käfig (8) aus einem Käfigkörper (6) und einem Käfigring (7) besteht.

3. Gleichlaufkugelfestgelenk nach Anspruch 2, dadurch gekennzeichnet, daß der Käfigkörper (6) aus einem Ringabschnitt und davon abstehenden Dornen besteht, und daß der Käfigring (7) an freien Enden der Dornen anliegt.

4. Gleichlaufkugelfestgelenk nach einem der Ansprüche 2 oder 3, dadurch gekennzeichnet, daß Käfigring (7) und Käfigkörper (6) mittels Schrauben verbunden sind.

5. Verfahren zur Montage eines Gleichlaufkugelfestgelenkes nach einem der Ansprüche 1 bis 4, dadurch gekennzeichnet,
daß zuerst der Käfigkörper (6) in die Nuten des äußere Gelenkkörpers (4) eingeschoben und sodann um einen Winkel verdreht wird, der dem halben Winkel zwischen benachbarten Kugeln (5) entspricht,
daß sodann die Welle (2) durch den äußeren Gelenkkörper (4) und den bereits eingesetzten Käfigkörper (6) geschoben wird, bis der einstückig mit ihr ausgebildete innere Gelenkkörper (3) seine axiale Endlage erreicht, wobei die Ausnehmungen des Käfigkörpers (6) über den Erhebungen des inneren Gelenkkörpers (3) plaziert sind, sodaß dieser seine endgültige Lage durch anschließendes Verdrehen um den gleichen Winkel, wie oben angegeben, erreicht,
daß sodann die Kugeln (5) in die Nuten eingebracht und der Käfigring (7) auf den Käfigkörper (6) aufgesetzt und mit ihm verbunden wird.
